# EUROPEAN PATENT APPLICATION

(11) **EP 3 366 962 A1**
(43) Date of publication of application: **29.08.2018**
(21) Application number: 16902470.0
(22) Date of filing: 10.06.2016
(51) Int. Cl.: F16K 15/06, C22B 23/00

(54) **CONE VALVE**

(30) Priority: 16.05.2016 JP 2016097732
(71) Applicant: Sumitomo Metal Mining Co., Ltd., Tokyo 105-8716 (JP)
(72) Inventor: JINNO, Hiroki, Tokyo 105-8716 (JP); GOTOU, Tetsurou, Tokyo 105-8716 (JP); KATO, Atsushi, Tokyo 105-8716 (JP)
(74) Representative: Müller-Boré & Partner Patentanwälte PartG mbB
(86) International application number: PCT/JP2016/067346
(87) International publication number: WO 2017/199451

(57) **Abstract**

A purpose of the present invention is to provide a cone valve, which significantly reduces a risk of damaging a valve seat, even if it is used as a check valve when feeding slurry containing highly abrasive coarse particles such as slurry of nickel oxide ore. The cone valve of the present invention is a cone valve (1) used as a check valve when feeding slurry, comprising: a valve seat (13); a valve body (11) for performing opening and closing operation by reciprocally moving in predetermined directions with respect to the valve seat; and a coil spring (14) incorporated to make the valve body contact the valve seat, wherein an annular abutting surface is provided in the valve seat by a contact with an end (1 1a) of the valve body, and the valve seat is configured to have a thickened part in which a thickness in normal direction of the abutting surface is increased inward from the abutting surface.

## Description

### BACKGROUND OF THE INVENTION

### Field of the Invention

The present invention relates to a cone valve used for preventing backflow when feeding fluid. The present application claims priority based on Japanese Patent Application No. 2016-097732 filed in Japan on May 16, 2016, which is incorporated by reference herein.

### Description of Related Art

It was difficult to use nickel oxide ore as nickel resource by the reasons such that a nickel content ratio is low. However, a hydrometallurgical process using high pressure acid leach technology has been developed, and it became possible to produce, for example nickel-cobalt mixed sulfide (with nickel grade of approximately 60 wt%) economically (for example, refer to patent document 1).

An example of the hydrometallurgical process of nickel oxide ore is as follows: at first producing ore slurry from ore with prescribed particle size, supplying the obtained slurry to an autoclave with high temperature and high pressure, leaching valuable metal component by mainly using mineral acid, obtaining leachate by removing unnecessary objects such as leached residue by decreasing temperature and pressure, and sulfurizing the leachate to produce nickel-cobalt mixed sulfide.

The ore slurry is produced such that a solid content is approximately 25 to 45 mass% and that a particle size of the solid content is approximately 2 mm or less (for example, refer to patent document 2), and supplied to the autoclave with high temperature and high pressure, i.e. with the temperature of approximately 250°C and the pressure of 3.5 to 4.0 MPaG Also, together with supply of ore slurry, mineral acid for leaching, air for accelerating oxidization, steam for maintaining temperature and else are supplied, and stirred by stirring machine to progress leaching.

It is necessary to increase the pressure of ore slurry to a high pressure to the extent higher than the pressure of the autoclave before entering the autoclave, in order to supply ore slurry into the autoclave, so the pressure and the temperature of ore slurry produced at atmospheric pressure and at temperature of plant environment are increased in stages by various means (for example, refer to patent document 3).

In initial stage, the temperature and the pressure are increased at the same time, by the combination of, for example heat exchanger and general feeding pump, to be the temperature of approximately 200°C and to be the pressure of approximately 1.5 MPaG, but finally, it is pressed into the autoclave by pressurizing to the pressure of 4.0 MPaG or more. As devices used in a final pressurizing step, a diaphragm type pump capable of continuously supplying necessary amount of ore slurry (approximately 240 m³/Hr) into the autoclave under condition of high temperature and high pressure, and a cone valve type check valve are normally used.

Ore slurry passing through the cone valve is sieved in advance such that the particle size of solid content is 1 to 2 mm, more preferably, less than 1.4 mm. At this time, even when there is no coarse particle larger than 1.4 mm, slight backflow always occurs, and a local abrasion progresses by slight damage of valve body by the impact at the time of closing of the cone valve. Especially, as either one of contact surfaces of the valve body and the valve seat is formed to be rounded and curved, the contact area between the valve body and the valve seat is small, so slurry tends to pass through when the slurry is stuck in between the contact surfaces at the time of closing of the cone valve, and the local abrasion occurs from the site at which slurry passed through. In this way, spaces, which should be partitioned by the contact surfaces of the valve body and the valve seat, could be communicated with each other, and a problem occurs that it will not be possible to maintain a prescribed discharge amount. In patent document 4, it is disclosed about a check valve, in which long life can be achieved by maintaining good sealing of the valve body in sealed condition, even when feeding slurry of such rigid particles.

Patent Document 1: Japanese Patent Application Laid-Open No. 2005-350766
Patent Document 2: Japanese Patent Application Laid-Open No. 2009-173967
Patent Document 3: Japanese Patent Application Laid-Open No. 2010-025455
Patent Document 4: Japanese Patent Application Laid-Open No. 2006-214539

### SUMMARY OF THE INVENTION

When the valve body of the valve part, which can be moved to open and close with respect to the valve seat of main body comprised in the cone valve, repeats opening and closing operation, impact is applied to the valve seat of the main body, and there was a risk that damage will be occurred. In addition, there was a problem that the valve seat will be damaged by the coarse particles contained in ore slurry being stuck between abutting parts of the valve body and the valve seat, when fluid to be fed is ore slurry with coarse particles.

The present invention is invented to solve the above problems, and the purpose of the present invention is to provide new and improved cone valve capable of reducing a risk of damaging the valve seat, even if it is used as a check valve when feeding slurry containing highly abrasive coarse particles.

One embodiment of the present invention is a cone valve used as a check valve when feeding slurry, comprising a valve seat, a valve body for performing opening and closing operation by reciprocally moving in predetermined directions with respect to the valve seat, and a coil spring incorporated to make the valve body contact the valve seat, wherein an annular abutting surface is provided in the valve seat by a contact with an end of the valve body, and the valve seat is configured to have a thickened part in which a thickness in normal direction of the abutting surface is increased inward from the abutting surface.

According to one embodiment of the present invention, the part of the valve seat abutting the end of the valve body is configured to be thickened, so even if opening and closing operation of the valve body with respect to the valve seat is repeated, it is possible to reduce a risk of damaging the valve seat.

At this time, in one embodiment of the present invention, the end of the valve body is formed to be a side surface, which is bent to be separated from the abutting surface at outermost periphery of the abutting surface, and a bending direction of the side surface may be in reciprocal movement direction of the valve body, or in inner direction of the abutting surface from the reciprocal movement direction.

In this way, the side surface, which is the end of the valve body, is configured to be separated from the abutting surface of the valve seat, so even if opening and closing operation of the valve body with respect to the valve seat is repeated, it is possible to reduce a risk of damaging the valve seat, as the end of the valve body does not hit the abutting surface of the valve seat.

In addition, in one embodiment of the present invention, the end of the valve body may be formed in disc shape, and its maximum diameter may be 226 to 236 mm.

In this way, it is possible to reduce a risk of damaging the valve seat, as the end of the valve body can be configured to be separated from the valve seat.

In addition, in one embodiment of the present invention, entire length of the coil spring may be at least shorter than stroke length of the valve body, when the entire length is equal to or less than free length.

In this way, it is possible to alleviate an impact even when coarse particles are stuck at the time of closing of the cone valve, so it is possible to prevent damage of the valve seat or the valve body, which triggers uneven abrasion.

In addition, in one embodiment of the present invention, the slurry may be slurry of nickel oxide ore.

In this way, it is possible to reduce a risk of damaging the valve seat, even if it is used as a check valve when feeding slurry containing highly abrasive coarse particles such as slurry of nickel oxide ore.

As explained in the above, according to the present invention, it is possible to extend a lifespan of the cone valve more than conventional cone valve, by reducing a risk of damaging the valve seat, even if it is used as a check valve when feeding slurry containing highly abrasive coarse particles.

### BRIEF DESCRIPTION OF THE DRAWINGS

Fig. 1 is a schematic view illustrating an example of use of a cone valve relating to one embodiment of the present invention.
Fig. 2 is a sectional perspective view illustrating an example of the cone valve relating to one embodiment of the present invention.
Fig. 3 is a sectional front view illustrating an example of the cone valve relating to one embodiment of the present invention in a closed state, in which a valve body and a valve seat of the cone valve are abutted.
Fig. 4 is a sectional front view illustrating an example of the cone valve relating to one embodiment of the present invention in an open state, in which the valve body and the valve seat of the cone valve are separated.
Fig. 5 is a sectional front view illustrating an example of a conventional cone valve as comparative example in a closed state, in which a valve body and a valve seat of the cone valve are abutted.
Figs. 6A to 6D are views for explaining operations of the conventional cone valve and the cone valve relating to one embodiment of the present invention.
Fig. 7 is a sectional front view illustrating an example of a cone valve relating to other embodiment of the present invention in a closed state, in which a valve body and a valve seat of the cone valve are abutted.
Fig. 8 is a sectional front view illustrating an example of the cone valve relating to other embodiment of the present invention in an open state, in which the valve body and the valve seat of the cone valve are separated.

### DETAILED DESCRIPTION OF THE INVENTION

Hereinafter, it is explained in detail about preferred embodiments of the present invention. In addition, the embodiments explained in the below are not unjustly limiting the content of the present invention described in claims, and not all of the configurations explained in the embodiments are necessary as the means for solving the problem of the present invention.

### (First Embodiment)

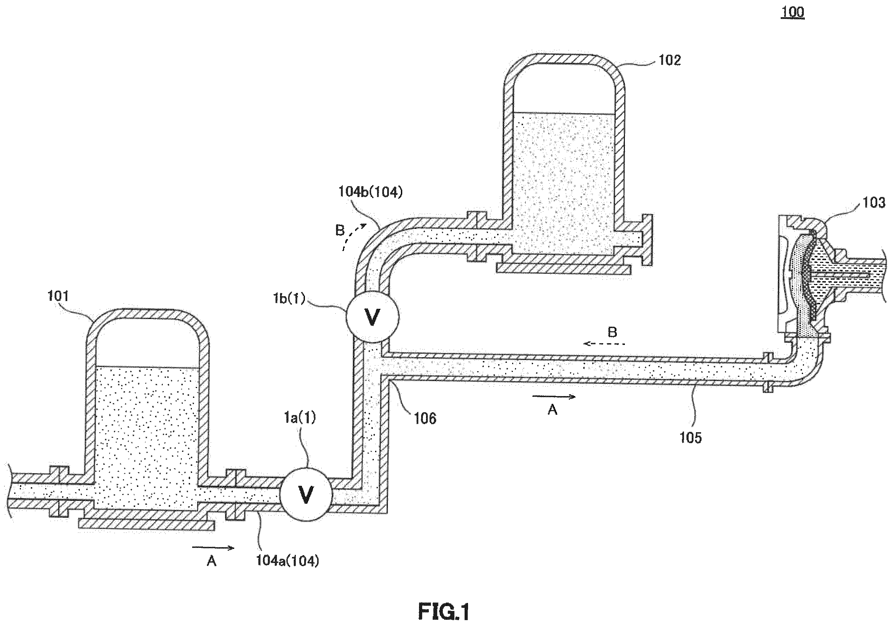

At first, explaining about a use mode of a cone valve relating to one embodiment of the present invention by using drawings. Fig. 1 is a schematic view illustrating an example of use of a cone valve relating to one embodiment of the present invention.

A cone valve 1 relating to one embodiment of the present invention is a cone valve used as a check valve when feeding slurry containing high abrasive coarse particles (maximum particle size is 1 to 2 mm), for example when feeding ore slurry obtained by pre-treatment of nickel oxide ore, and for example, it will be installed in a feeding device 100 as illustrated in Fig. 1.

As illustrated in Fig. 1, the feeding device 100 comprises an upstream side slurry tank 101, a downstream side slurry tank 102, and a diaphragm type pump 103. The upstream side slurry tank 101 and the downstream side slurry tank 102 are connected by a first pipe 104. The diaphragm type pump 103 is connected to the first pipe 104 via a second pipe 105. Also, the first pipe 104 and the second pipe 105 are connected by a connection 106. And, one cone valve 1 is arranged at a first pipe 104a between the connection 106 and the upstream side slurry tank 101 (upstream side cone valve 1a), and one cone valve 1 is arranged at a first pipe 104b between the connection 106 and the downstream side slurry tank 102 (downstream side cone valve 1b).

And, the feeding device 100 is configured such that when diaphragm part of the diaphragm type pump 103 moves to right (to one direction) and sucks in, the upstream side cone valve 1a will be in the open state, and the downstream side cone valve 1b will be in the closed state, and slurry will be supplied from the upstream side slurry tank (pressure is approximately 1.5 MPaG) 101 to the diaphragm type pump 103, as illustrated by solid line arrow A in Fig. 1.

On the other hand, the feeding device 100 is configured such that when diaphragm part of the diaphragm type pump 103 moves to left (to other direction) and discharges, the upstream side cone valve 1a will be in the closed state, and the downstream side cone valve 1b will be in the open state, and slurry will be supplied from the diaphragm type pump 103 to the downstream side slurry tank (pressure is 4.0 MPaG or more) 102, as illustrated by dotted line arrow B in Fig. 1.

Thus, it is configured that, when feeding the slurry containing highly abrasive coarse particles, the cone valve 1 is repeatedly switched to open state and closed state, along with the repeated movement of the diaphragm part of the diaphragm type pump 103 in left and right directions (one or other direction) under the condition of high temperature and high pressure (1.5 MPaG to 4.0 MPaG).

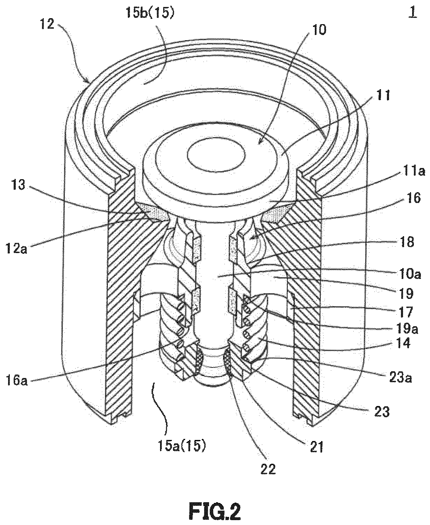

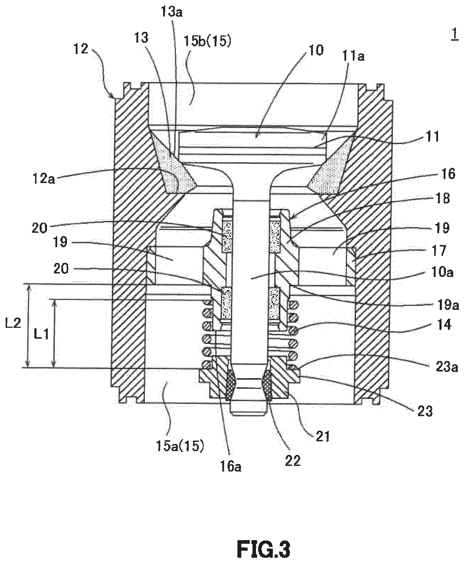

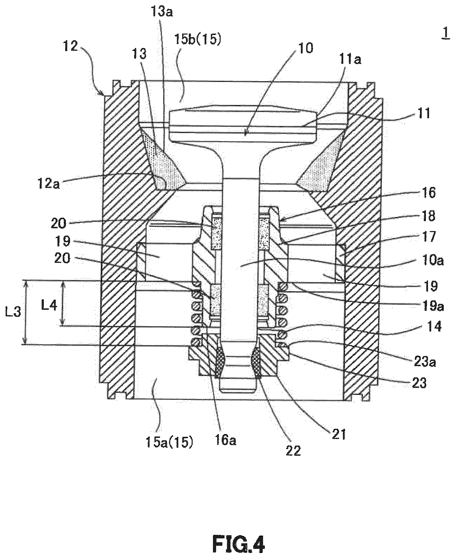

Next, explaining about a configuration of a cone valve relating to one embodiment of the present invention by using drawings. Fig. 2 is a sectional perspective view illustrating an example of the cone valve relating to one embodiment of the present invention, Fig. 3 is a sectional front view illustrating an example of the cone valve relating to one embodiment of the present invention in a closed state, in which a valve body and a valve seat of the cone valve are abutted, and Fig. 4 is a sectional front view illustrating an example of the cone valve relating to one embodiment of the present invention in an open state, in which the valve body and the valve seat of the cone valve are separated.

As illustrated in Figs. 2, 3, and 4, the cone valve 1 of the embodiment at least comprises a valve part 10 with a valve body 11, a main body 12 with a valve seat 13, and a coil spring 14 incorporated to make the valve body 11 contact the valve seat 13.

As illustrated in Fig 3, the valve part 10 is formed by 25% Cr cast steel, and comprises a cylindrical bar member 10a and the valve body 11 protruding radially outside of the bar member 10a from an end of the bar member 10a. This valve part 10 is housed in the main body 12 movably along axial direction of the main body 12 in a range from one end of the main body 12 to the valve seat 13. In other words, the valve part 10 is having a function that the valve body 11 performs opening and closing operation by reciprocally moving in predetermined direction with respect to the valve seat 13.

As illustrated in Fig 3, the main body 12 is formed by 25% Cr cast steel and formed in tubular shape, and comprises an insertion part 15 for inserting slurry into inside and for housing the valve part 10. In addition, as illustrated in Figs. 2 to 4, an intermediate part 12a in the insertion part 15 of the main body 12 is formed to be protruding radially inside of the main body 12, and the valve seat 13 abutting the valve body 11 is arranged at the intermediate part 12a. The part of the valve body 11 in line contact with the valve seat 13 will be an annular abutting surface, in order to prevent movement of slurry in closed state. In other words, an annular abutting surface will be provided in the valve seat 13 by a contact with an end 1 1a of the valve body 11. In addition, "abutting surface" indicated here intersects with the valve body 11 if it is prolonged, but when sectioning the valve body 11 by prolonged abutting surface, a side of the valve body 11 which contacts the abutting surface will be the end 11 a.

In the embodiment, as illustrated in Fig. 3, it is configured such that the part of the valve seat 13 abutting the end 11a of the valve body 11 is thickened, in order to secure durability with respect to impact from the valve body 11 performing opening and closing operation repeatedly. Concretely, the valve seat 13 is configured such that a thickness of the part of the valve seat 13 abutting to the end 11a of the valve body 11 is increased from top side to midslope side of the valve seat 13. In addition, "thickened" indicated here is defined in normal direction of the abutting surface of the valve seat 13 with the end 11a of the valve body 11. In other words, the valve seat 13 is configured to have a thickened part in which a thickness of the valve seat 13 is increased in normal direction of the abutting surface, inward from the annular abutting surface.

When the valve body 11 repeats opening and closing operation, the valve body 11 and the valve seat 13 will be worn, and abutting surface itself will move to inner peripheral side. Therefore, in the embodiment, it is configured to comprise a thickened part at inner side from the abutting surface when it is new, by anticipating such movements of the abutting surface itself toward inner peripheral side. In this way, it will be durable to impact also in the future. In addition, thickness of the thickened part of such valve seat 13 is for example 20 to 40 mm.

In addition, when the valve body 11 repeats opening and closing operation, abutting surfaces of the valve body 11 and the valve seat 13 will be worn, and width of the abutting surfaces will be enlarged. It is difficult to improve strength at outer peripheral side of the valve body 11, so it is better to make the abutting surfaces tend not to be extended to the outer peripheral side. Concretely, a surface of the valve body 11 is bent from outermost periphery of the abutting surface to out of the abutting surface (inward from outermost periphery of the abutting surface), but this bending direction may be in reciprocal movement direction of the valve body 11, or in inner peripheral side of the abutting surface from the reciprocal movement direction, in other words, it may be in inner direction of the abutting surface from the reciprocal movement direction of the valve body 11. In this way, it is possible to prevent enlargement of outer diameter of the abutting surface, as a diameter of the valve body 11 is not enlarged near the abutting surface.

Also, as illustrated in Fig. 3, in other end area 15a at other end side of the main body 12, a sliding and supporting member 16 for slidably supporting the valve part 10 is mounted. This sliding and supporting member 16 comprises a fitting part 17 formed in annular shape and fitted to inner peripheral surface of the other end area 15a of the main body 12, a tubular sliding and supporting part 18 arranged in the fitting part 17 for slidably supporting the valve part 10 inserted inside the sliding and supporting part 18, and connections 19 plurally formed between the fitting part 17 and the sliding and supporting part 18 for connecting the fitting part 17 and the sliding and supporting part 18.

In addition, the sliding and supporting part 18 may slidably support the valve part 10 via a sliding member 20 formed by a material excellent in sliding property and low friction property, or the sliding and supporting part 18 may slidably support the valve part 10 directly. Further, a coil spring 14 is arranged at outer peripheral surface of the sliding and supporting part 18 at the other end side from the connections 19.

Also, as illustrated in Fig.3, an abutting part 21 for abutting the coil spring 14 is mounted at other end of the valve part 10. This abutting part 21 is formed in tubular shape, and the other end of the valve part 10 is inserted inside the abutting part 21, and the abutting part 21 is removably mounted to the other end of the valve part 10 by a fixing member 22 such as a wedge member. Therefore, the abutting part 21 moves in the main body 12 along with the movement of the valve part 10 along the axial direction of the main body 12. Further, a flange 23 protruding radially outside of the abutting part 21 is formed at the outer peripheral surface of the abutting part 21. Further, the abutting part 21 is arranged with the coil spring 14 at the outer peripheral surface of the abutting part 21 at the end side from the flange 23. In addition, the abutting part 21 may be mounted by bonding, welding or the like, without using the fixing member 22.

As illustrated in Fig.4, the coil spring 14 is for example a spring in coil shape, and arranged at outer peripheral surface of the sliding and supporting member 16 of the main body 12 and at outer peripheral surface of the abutting part 21 of the valve part 10, and an end of the coil spring 14 is abutted to other end surface 19a of the connections 19 of the main body 12, and other end of the coil spring 14 is abutted to an end surface 23a of the flange 23 of the abutting part 21, and the valve part 10 is energized by the coil spring 14 toward the other end side of the main body 12 such that the valve body 11 arranged at the end side from the valve seat 13 will be abutted to the valve seat 13.

Also, in the embodiment, as illustrated in Fig. 3, the entire length of the coil spring 14 is formed to be at least shorter than the stroke length of the valve body 11 (valve part 10), when it is equal to or less than free length. Concretely, as illustrated in Fig. 3, the entire length L1 of the coil spring 14 is formed to be shorter than the stroke length L2, which is a length between the other end surface 19a of the connections 19 and the end surface 23a of the flange 23 of the abutting part 21 in the closed state in which the valve body 11 and the valve seat 13 are abutted to each other. In addition, as illustrated in Fig. 4, in the open state in which the valve body 11 and the valve seat 13 are separated, the entire length L3 of the coil spring 14 is shorter than L1, so it is also shorter than the stroke length L2 (fixed value). As an example, the entire length L1 of the coil spring 14 is 155 mm, and the stroke length L2 is 161 mm.

When the valve body 11 is in proximity of the valve seat 13, or when it is in the closed state in which the valve body 11 is abutted to the valve seat 13, as illustrated in Fig. 3, the coil spring 14 does not energize the valve part 10 toward the other end side of the main body 12 (also not toward the end side). In addition, at this time, the free length of the coil spring 14 is equal to the entire length L1, and shorter than the stroke length L2. On the other hand, when it is in the open state in which the valve body 11 is separated from the valve seat 13, as illustrated in Fig. 4, the entire length L3 of the coil spring 14 is equal to or less than the free length. When the valve body 11 and the valve seat 13 are separated to the extent that the entire length L3 of the coil spring 14 is shorter than the free length, the coil spring 14 energizes the valve part 10 toward the other end side of the main body 12.

In such cone valve 1, it will turn to the closed state from the open state, when the entire length L1 of the coil spring 14 is equal to the free length, in other words, when elastic force from the coil spring 14 is 0, so it is possible to minimize the impact when the valve body 11 is abutted to the valve seat 13.

Also, as illustrated in Fig. 4, the entire length (height at the time of allowable load) L3 of the coil spring 14 when it is bent in compression direction to the maximum is formed to be longer than a guide length L4 between the other end surface 19a of the connections 19 and other end surface 16a of the sliding and supporting member 16. Thereby, the coil spring 14 is protruding to the other end side more than the other end surface 16a of the sliding and supporting member 16, even if the coil spring 14 is bent in compression direction to what extent, so it prevents the fixation by hooking of the valve part 10 and the sliding and supporting member 16 and else, by preventing the sliding and supporting member 16 and the abutting part 21 of the valve part 10 from contacting each other.

The cone valve 1 having the above configuration flows the fluid from the other end area 15a at the other end side of the main body 12 toward the end area 15b at the end side of the main body 12, by separating the valve body 11 from the valve seat 13 by pushing up the valve body 11 to the end side of the main body 12 against the energizing force of the coil spring 14, when the fluid pressurized more than the prescribed value is fed from the other end side to the end side of the main body 12.

On the other hand, when the pressure at the end side of the main body 12 becomes or is higher than the pressure at the other end side of the main body 12, the cone valve 1 pushes down the valve body 11 to the other end side of the main body 12 with the help of the coil spring 14 to contact the valve body 11 to the valve seat 13. And, the cone valve 1 shuts off the end area 15b at the end side of the main body 12 and the other end area 15a at the other end side of the main body 12 by putting a lid on the insertion part 15 by the valve body 11, and prevents the fluid from flowing backward from the end area 15b of the main body 12 to the other end area 15a of the main body 12.

Here, the inventors presumed as below about the cause of occurring malfunction of the cone valve, i.e. the cause of occurring communication between the upstream side and the downstream side of the cone valve. When the cone valve changes from the open state to the closed state, the highly abrasive particles inevitably contained in slurry will be interposed in a gap between the valve body and the valve seat, and the surface of either one of the valve body and the valve seat will be damaged. It depends on a size of a crack by the damage or a position of the crack, but the crack grows gradually by the repeated opening and closing of the cone valve (when stroke is 60%, approximately 1908 times/ Hr), and at certain point, the crack becomes a flow channel allowing the slurry to flow backward, and through this crack, the communication between the upstream side and the downstream side of the cone valve begins. Then, the slurry always flows through the gap between the valve body and the valve seat and the abrasion progresses, and finally, large communicating part will be formed, so the feeding efficiency of the slurry decreases extremely, and it will be in the state that the part replacement is necessary.

Further, the inventors presumed that, as a crack occurred at first is bigger, the term that the part replacement will be necessary (hereinafter, may be referred to as lifespan) becomes shorter, and found that strength of the spring is a cause of enlarging the crack. In other words, the degree of crack will be deeper and worse, if the coil spring is too strong, when highly abrasive particles are interposed at the time of closed state of the cone valve.

Until now, the strength of the coil spring has been set to relatively strong level aiming minimization of backflow, but the inventors have found that it is possible to inhibit backflow, if the valve body 11 is inertially moved until a point in which the cone valve is in the closed state. Therefore, the inventors have reached a conclusion that the function of the coil spring in this cone valve is sufficient if it can prevent fixation by hooking.

As mentioned above, even if the coarse particles are interposed when closing the cone valve 1, the cone valve 1 is capable of alleviating an impact thereof by configuring the entire length L1 of the coil spring 14 to be shorter than the stroke length L2 of the valve body 11, and it is possible to alleviate the degree of crack by preventing the damage of the valve body 11 or the valve seat 13, which will be a trigger for uneven abrasion, so it is possible to maintain the lifespan two or three times longer than the conventional lifespan.

In addition, the stroke length means a length of space in which the coil spring 14 is incorporated in Fig. 3. Conventionally, when the coil spring 14 is incorporated to make the valve body 11 contact the valve seat 13, the coil spring 14 is fit between the stroke length (for example 161 mm) shorter than the free length (for example 188 mm), and even in the state that the valve body 11 and the valve seat 13 are abutting to each other, a repulsive force of the coil spring 14 works and it is in the state that the valve body 11 is pushed onto the valve seat 13. Therefore, conventionally, the impact was stronger at least as much as the repulsive force, when the coarse particles are interposed at the time of closing of the cone valve.

In contrast, in the present invention, the free length of the coil spring 14 is being shorter (for example 155 mm) than the stroke length. Therefore, it will be in the state that the repulsive force will not be worked, so it is possible to alleviate the impact as much as the repulsive force, even if the coarse particles are interposed when closing the cone valve.

In addition, the inventors have found that a crack occurred at outer edge of the valve seat caused by accumulation of residual stress due to impact to the valve seat by repeated reciprocal movement of the valve body is one of causes for making communication between the upstream side and the downstream side of the cone valve by malfunction of the cone valve, i.e. by abrasion of the valve seat or the valve body.

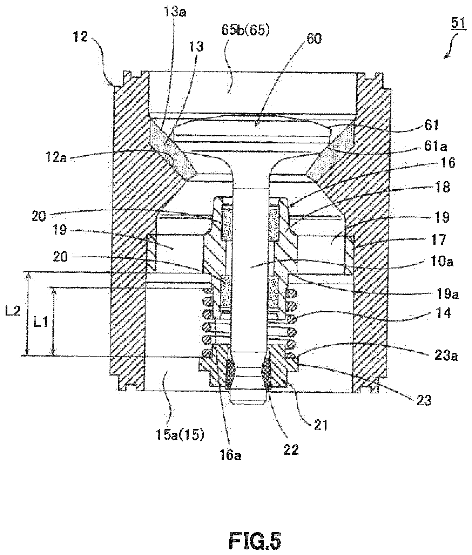

In other words, in conventional cone valve 51 as illustrated in Fig. 5, the valve seat 13 being extended toward upper side is used for alleviating impact from the valve body 61 of the valve part 60, which repeatedly moves reciprocally, by dissipating the impact in longitudinal direction.

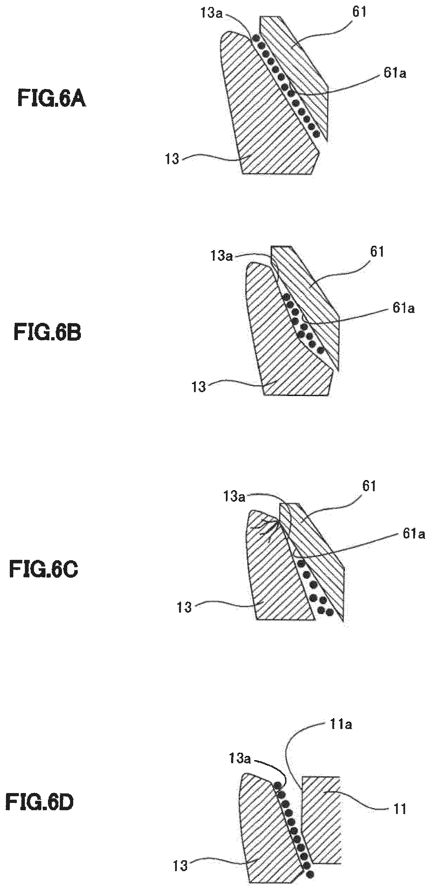

When using such cone valve in which the valve seat 13 is extended toward upper side, by highly abrasive coarse particles (maximum particle size is 1 to 2 mm) being stuck repeatedly between a contact surface 61a of the valve body 61 and an abutting inclined surface 13a of the valve seat 13, as illustrated in Fig. 6A, a center side of the abutting inclined surface 13a of the valve seat 13 will be worn by the coarse particles, and a gap at the center side will be enlarged, as illustrated in Fig. 6B.

And, when the gap at the center side of the abutting inclined surface 13a of the valve seat 13 is enlarged, the abutting inclined surface 13a will come to contact the valve body 61, and a crack occurs from upper end of thin outer edge of the abutting inclined surface 13a, as illustrated in Fig. 6C. Therefore, in the embodiment, it is configured such that a part of the valve seat 13 abutting an end 11a of the valve body 11 will not be moved so much, even if the gap is enlarged, by configuring the valve seat 13 to be thickened toward a center side (inner side) from the part abutting the end 11a of the valve body 11, as illustrated in Fig. 3.

In addition, in the embodiment, a risk for damaging the valve seat 13 is reduced by configuring a side surface, which is the end 11a of the valve body 11, to be bent and separated from the abutting inclined surface 13a of the valve seat 13, such that the side surface, which is the end 11a of the valve body 11, will not contact the abutting inclined surface 13a of the valve seat 13. Especially, a bending direction is preferably in a reciprocal movement direction of the valve body 11, or in a center side (inner side) from the reciprocal movement direction. In this way, it is possible to reduce a risk for damaging the valve seat 13, even with respect to abrasion of the valve seat 13 and the valve body 11 by the opening and closing operation (reciprocal movement) of the valve body 11.

Further, by shrinking-a diameter more than conventional outer diameter (246 mm) such that the outer diameter, which is a maximum diameter of the end 11a of the valve body 11 in disc shape, will be 226 to 236 mm, it is possible to easily secure a thickness at a contact point with the abutting inclined surface 13a of the valve seat 13, so it is possible to prevent occurrence of crack from upper end side of the valve seat 13 extended toward upper side.

Further, the cone valve 1 can be applied suitably if the slurry is slurry containing highly abrasive coarse particles (maximum particle size is 1 to 2 mm). Especially, it can be applied particularly effectively, if the slurry is ore slurry obtained by treating nickel oxide ore, so it is having an extremely high industrial value.

### (Second Embodiment)

In the cone valve 1 relating to one embodiment of the present invention, the valve body 11 is arranged at the end side with respect to the valve seat 13, the coil spring 14 is arranged at the other end side, and the valve body 11 and the coil spring 14 are arranged in different direction to each other with respect to the valve seat 13, but in a cone valve 31 of other embodiment of the present invention, a valve body 41 and a coil spring 44 are arranged in same direction with respect to a valve seat 43.

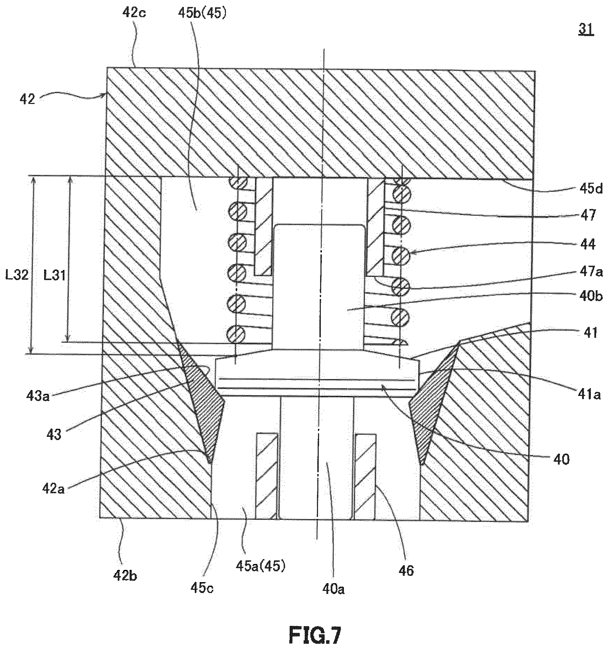

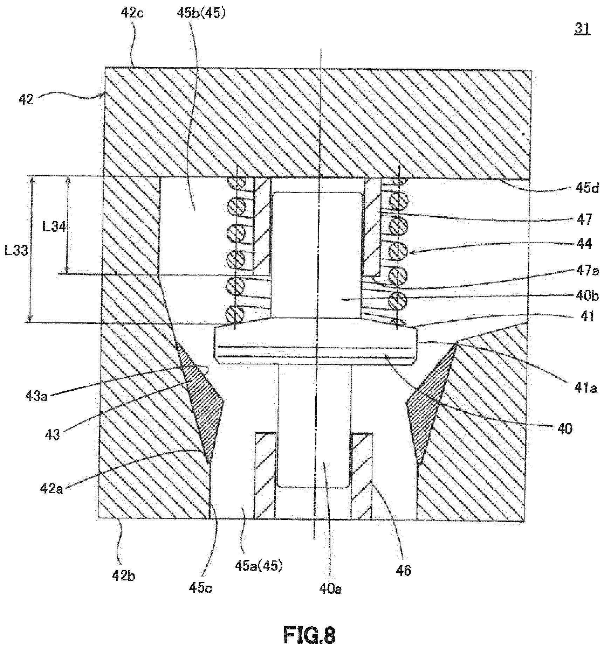

Concretely, as illustrated in Figs. 7 and 8, a cone valve 31 at least comprises a valve part 40 having a valve body 41, a main body 42 having a valve seat 43, and a coil spring 44 incorporated to make the valve body 41 contact the valve seat 43.

As illustrated in Fig. 7, the valve part 40 comprises cylindrical first and second bar members 40a, 40b, and the valve body 41 arranged between the first and second bar members 40a, 40b, and protruding radially outside of the first and second bar members 40a, 40b. This valve part 40 is housed in the main body 42 movably along the axial direction of the main body 42, while the first bar member 40a is slidably housed in a first guide part 46 of the main body 42, and while the second bar member 40b is slidably housed in a second guide part 47 of the main body 42, and also, while the valve body 41 is arranged at the end side of the main body 42 from the valve seat 43.

As illustrated in Fig. 7, the main body 42 is formed in tubular shape and comprising an insertion part 45 through which slurry is inserted to inside and in which the valve part 40 is housed. For example, this insertion part 45 is formed in approximately L shape, so that a bottom surface opening 45c formed at a bottom surface 42b of the main body 42 and a side surface opening 45d formed at a side surface of the main body 42 are being communicated with each other. Further, in an intermediate part at the bottom surface 42b side in the insertion part 45, the valve seat 43 protruding radially inside of the main body 42 and abutting the valve body 41, is formed. A part of the valve body 41 in line contact with the valve seat 43 will be an annular abutting surface, in order to prevent a movement of slurry in closed state. In other words, an annular abutting surface will be provided in the valve seat 43 by a contact with an end 41a of the valve body 41. In addition, "abutting surface" indicated here intersects with the valve body 41 if it is prolonged, but when sectioning the valve body 41 by prolonged abutting surface, a side of the valve body 41 which contacts the abutting surface will be the end 41a.

In the embodiment, as illustrated in Fig. 7, it is configured such that the part of the valve seat 43 abutting the end 41a of the valve body 41 is thickened, in order to secure durability with respect to impact from the valve body 41 performing opening and closing operation repeatedly. Concretely, the valve seat 43 is configured such that a thickness of the part of the valve seat 43 abutting to the end 41a of the valve body 41 is increased from top side to midslope side of the valve seat 43. In addition, "thickened" indicated here is defined in normal direction of the abutting surface of the valve seat 43 with the end 41a of the valve body 41.

When the valve body 41 repeats opening and closing operation, the valve body 41 and the valve seat 43 are worn, and abutting surface itself will move to inner peripheral side. Therefore, in the embodiment, it is configured to comprise a thickened part at inner side from the abutting surface when it is new, by anticipating such movements of the abutting surface itself toward inner peripheral side. In this way, it will be durable to impact also in the future. In addition, thickness of the thickened part of such valve seat 43 is for example 20 to 40 mm.

In addition, when the valve body 41 repeats opening and closing operation, abutting surfaces of the valve body 41 and the valve seat 43 will be worn, and width of the abutting surfaces will be enlarged. It is difficult to improve strength at outer peripheral side, so it is better to make the abutting surfaces tend not to be extended to the outer peripheral side. Concretely, a surface of the valve body 41 is bent from outermost periphery of the abutting surface to out of the abutting surface (inward from outermost periphery of the abutting surface), but this bending direction may be in reciprocal movement direction of the valve body 41, or in inner peripheral side of the abutting surface from the reciprocal movement direction, in other words, it may be in inner direction of the abutting surface from the reciprocal movement direction of the valve body 41. In this way, it is possible to prevent enlargement of outer diameter of the abutting surface, as a diameter of the valve body 41 is not enlarged near the abutting surface.

Further, as illustrated in Fig. 7, tubular first guide part 46 slidably supporting the valve part 40 is formed at the bottom surface 42b side of the main body 42. This first guide part 46 is arranged in the other end area 45a of the other end side of the main body 42 via a connection (not illustrated) or the like, and also, arranged coaxially with a central axis of the bottom surface opening 45c of the main body 42, and slidably supporting the valve part 40 by inserting the first bar member 40a inside thereof.

Also, as illustrated in Fig. 7, tubular second guide part 47 slidably supporting the valve part 40 is formed at inner wall surface of a top surface 42c of the main body 42. This second guide part 47 is arranged in the end area 45b of the end side of the main body 42, and also, arranged coaxially with the first guide part 46, and slidably supporting the valve part 40 by inserting the second bar member 40b inside thereof. Further, the coil spring 44 is arranged at outer peripheral surface of the second guide part 47.

As illustrated in Fig. 8, the coil spring 44 is, for example a spring in coil shape, arranged at the outer peripheral surface of the second guide part 47 of the main body 42, and an end part of the coil spring 44 is abutting the inner wall surface of the top surface 42c of the main body 42, and other end of the coil spring 44 is abutting the valve body 41 of the valve part 40, and the valve part 40 is energized by the coil spring 44 toward the other end side of the main body 42 such that the valve body 41 arranged at the end side from the valve seat 43 will be abutted to the valve seat 43.

Also, as illustrated in Fig. 7, the entire length of the coil spring 44 is formed to be at least shorter than the stroke length of the valve body 41 (valve part 40), when it is equal to or less than free length.

Concretely, as illustrated in Fig. 7, the entire length L31 of the coil spring 44 is formed to be shorter than the stroke length L32, which is a length between the inner wall surface of the top surface 42c of the main body 42 and the valve body 41 of the valve part 40 in the closed state in which the valve body 41 is abutted to the valve seat 43. As illustrated in Fig. 8, in the open state in which the valve body 41 is separated from the valve seat 43, the entire length L33 of the coil spring 44 is shorter than L31, so it is shorter than the stroke length L32 (fixed value). As an example, the entire length L31 of the coil spring 44 is 155 mm, and the stroke length L32 is 161 mm.

As illustrated in Fig. 7, when the valve body 41 is close to the valve seat 43, or when in the closed state in which the valve body 41 is abutted to the valve seat 43, the coil spring 44 does not energize the valve part 40 toward the other end side (also not toward the end side) of the main body 42. In addition, at this time, the free length of the coil spring 44 is equal to the entire length L31, and shorter than the stroke length L32. On the other hand, as illustrated in Fig. 8, when in the open state in which the valve body 41 is separated from the valve seat 43, the entire length L33 of the coil spring 44 is equal to or less than the free length. When the valve body 41 is separated from the valve seat 43 to the extent that the entire length L33 of the coil spring 44 is shorter than the free length, the coil spring 44 energizes the valve part 40 toward the other end side of the main body 42.

Such cone valve 31 turns to the closed state from the open state, when the entire length L31 of the coil spring 44 is equal to the free length, i.e. when the elastic force from the coil spring 44 is 0, so it is possible to minimize the impact when the valve body 41 is abutted to the valve seat 43.

Also, as illustrated in Fig. 8, the entire length (height at the time of allowable load) L33 of the coil spring 44 when it is bent in compression direction to the maximum is formed to be longer than the length L34 between the inner wall surface of the top surface 42c of the main body 42 and other end surface 47a of the second guide part 47. Thereby, the coil spring 44 is protruding to the other end side more than the other end surface 47a of the second guide part 47, even if the coil spring 44 is bent in compression direction to what extent, so it prevents the fixation by hooking of the valve body 41 and the second guide part 47, by preventing the valve body 41 and the second guide part 47 from contacting each other.

As well as the cone valve 1 relating to one embodiment of the present invention, the cone valve 31 relating to other embodiment of the present invention flows the fluid from the other end area 45a at the other end side of the main body 42 toward the end area 45b at the end side of the main body 42, by separating the valve body 41 from the valve seat 43 by pushing up the valve body 41 to the end side of the main body 42 against the energizing force of the coil spring 44, when the fluid pressurized more than the prescribed value is fed from the other end side to the end side of the main body 42.

On the other hand, as well as the cone valve 1 relating to one embodiment of the present invention, in the cone valve 31, the valve body 41 is abutted to the valve seat 43 by pushing down the valve body 41 to the other end side of the main body 42 with the help of the coil spring 44, when the pressure at the end side of the main body 42 becomes or is higher than the pressure at the other end side of the main body 42. And, the cone valve 31 prevents the fluid from flowing backward from the end area 45b of the main body 42 to the other end area 45a of the main body 42, by shutting off the end area 45b at the end side of the main body 42 and the other end area 45a at the other end side of the main body 42 by putting a lid on the insertion part 45 by the valve body 41

As mentioned above, as well as the cone valve 1 relating to one embodiment of the present invention, the cone valve 31 relating to other embodiment of the present invention is capable of alleviating the impact, even if the coarse particles are interposed when closing the cone valve 31, by configuring the entire length L31 of the coil spring 44 to be shorter than the stroke length L32 of the valve body 41. Therefore, it is possible to alleviate the degree of crack by preventing the damage of the valve body 41 or the valve seat 43, which will be a trigger for uneven abrasion, so it is possible to maintain the lifespan two or three times longer than the conventional lifespan.

In addition, as well as the cone valve 1 relating to one embodiment of the present invention, the cone valve 31 relating to other embodiment of the present invention is configured such that a part of the valve seat 43 abutting the end 41a of the valve body 41 will not be moved so much, even if the gap is enlarged, by configuring the valve seat 43 to be thickened toward a center side (inner side) from the part abutting the end 41a of the valve body 41.

Further, in the embodiment, a side surface, which is the end 41a of the valve body 41, is configured to be bent and separated from the abutting inclined surface 43a of the valve seat 43. Therefore, the side surface, which is the end 41a of the valve body 41, will not contact the abutting inclined surface 43a of the valve seat 43, so it is possible to reduce a risk of damaging the valve seat 43. Especially, a bending direction is preferably in a reciprocal movement direction of the valve body 41, or in a center side (inner side) from the reciprocal movement direction. In this way, it is possible to reduce a risk for damaging the valve seat 43, even with respect to abrasion of the valve seat 43 and the valve body 41 by the opening and closing operation (reciprocal movement) of the valve body 41.

In addition, by shrinking a diameter more than conventional outer diameter such that the outer diameter, which is a maximum diameter of the end 41a of the valve body 41 in disc shape, will be 226 to 236 mm, it is possible to easily secure a thickness at a contact point with the abutting inclined surface 43a of the valve seat 43, so it is possible to prevent occurrence of crack from upper end side of the valve seat 43 extended toward upper side.

Further, as well as the cone valve 1 relating to one embodiment of the present invention, the cone valve 31 relating to other embodiment of the present invention can be applied suitably if the slurry is slurry containing highly abrasive coarse particles (maximum particle size is 1 to 2 mm). Especially, it can be applied particularly effectively, if the slurry is ore slurry obtained by treating nickel oxide ore, so it is having an extremely high industrial value.

### EXAMPLES

Hereinafter, explaining in detail about a cone valve relating to one embodiment of the present invention by examples. However, the present invention should not be limited to these examples.

The cone valve of the following example 1, example 2, reference example 1, reference example 2, and comparative example 1 were respectively installed in a feeding device as illustrated in Fig. 1, and operated to check the existence of malfunction.

Common conditions were as follows:
- Slurry Solid content: Nickel oxide ore
   (Slurry with maximum particle size 1 to 2 mm)
   Solid content concentration: 30 mass%
- Feeding amount of slurry Approximately 240 m³/Hr
   (at 60% stroke operation, operating two devices)
- Stroke length of cone valve: 161 mm

- Size of coil spring used for examples, reference examples and comparative example.
   (Examples, Reference examples): Free length 155 mm
   (Comparative example): Free length 188 mm

### (Reference Example 1)

In reference example 1, a cone valve, in which shapes of contact surfaces of a valve body (outer diameter 246 mm) of a valve part and a valve seat of a main body were respectively formed to be rounded and curved, was installed in the feeding device as illustrated in Fig. 1, and the slurry was fed. As a result, malfunction did not occur to the cone valve of the reference example 1 even after 645 hours of operation.

### (Reference Example 2)

In reference example 2, a cone valve as illustrated in Fig. 5 having a similar configuration as the reference example 1 except that shapes of contacting parts of a valve body of a valve part and a valve seat of a main body were respectively formed linearly and flat, was installed in the feeding device as illustrated in Fig. 1, and the slurry was fed. As a result, malfunction did not occur to the cone valve of the reference example 2 even after 968 hours of operation.

### (Example 1)

In example 1, a cone valve as illustrated in Figs. 2, 3 and 4 having a similar configuration as the reference example 2 except that a part of a valve seat abutting to an end of a valve body was configured to be thickened, and also, that the end of the valve body was formed as a side surface extending in vertical direction to be separated with respect to an abutting inclined surface of the valve seat, and that an outer diameter of the valve body was 236 mm, was installed in the feeding device as illustrated in Fig. 1, and the slurry was fed. As a result, malfunction did not occur to the cone valve of the example 1 even after 1331 hours of operation. The cone valve was removed and condition of worn part was checked, but there were fewer deep cracks than reference examples 1 and 2.

### (Example 2)

In example 2, a cone valve having a similar configuration as the example 1 except that an outer diameter of a valve body was 226 mm, was installed in the feeding device as illustrated in Fig. 1, and the slurry was fed. As a result, malfunction did not occur to the cone valve of the example 2 even after 1151 hours of operation. The cone valve was removed and condition of worn part was checked, but there were fewer deep cracks than reference examples 1 and 2.

### (Comparative Example 1)

In comparative example 1, a cone valve having a similar configuration as the reference example 1 except that a size of a coil spring was different, was installed in the feeding device as illustrated in Fig. 1, and the slurry was fed. As a result, in the cone valve of the comparative example 1, slurry started to flow backward in 200 hours and it became impossible to feed, so part replacement was necessary.

As mentioned above, according to the reference example 1, it is possible to maintain the lifespan more than three times longer than the lifespan of the conventional cone valve (comparative example 1). Further, according to the reference example 2, it is possible to maintain the lifespan almost five times longer than the conventional cone valve (comparative example 1), so it can be understood that it is possible to use it for more than a month (approximately 720 hours). Further, according to the examples 1 and 2, it is possible to maintain the lifespan more than five times longer than the conventional cone valve (comparative example 1), and also, it can be understood that there were fewer deep cracks than reference examples 1 and 2. In other words, it can be understood that it is possible to prolong the lifespan of the cone valve further, by configuring the part of the valve seat abutting to the end of the valve body to be thickened, and by configuring the side surface, which is the end of the valve body, to be separated from the abutting inclined surface of the valve seat.

In addition, it was explained in detail about each embodiment and each example of the present invention as the above, but it is easy for those who skilled in the art to understand that various modifications are possible without substantially departing from new matters and effects of the present invention. Therefore, all of such modified examples are included within the scope of the present invention.

For example, a term used at least once in the description or drawings together with a different term that is broader or the same in meaning can also be replaced by the different term in any place in the description or drawings. Further, the configurations and operations of the cone valve are not limited to those described in each embodiment and each example of the present invention but may be carried out in various modifications.

### GLOSSARY OF DRAWING REFERENCES

1, 31 Cone valve
1a Upstream side cone valve
1b Downstream side cone valve
10, 40 Valve part
10a Bar member
11, 41 Valve body
11a, 41a End (Side surface)
12, 42 Main body
12a, 42a Intermediate part
13, 43 Valve seat
13a, 43a Abutting inclined surface
14,44 Coil spring
15, 45 Insertion part
15a, 45a Other end area
15b, 45b End area
16 Sliding and supporting member
16a Other end surface
17 Fitting part
18 Sliding and supporting part
19 Connections
19a Other end surface
20 Sliding member
21 Abutting part
22 Wedge member (Fixing member)
23 Flange
23a End surface
40a First bar member
40b Second bar member
42b Bottom surface
42c Top surface
45c Bottom surface opening
45d Side surface opening
46 First guide part
47 Second guide part
47a Other end surface
100 Feeding device
101 Upstream side slurry tank
102 Downstream side slurry tank
103 Diaphragm type pump
104 First pipe
105 Second pipe
106 Connection

## Claims

1. A cone valve used as a check valve when feeding slurry, comprising:
a valve seat;
a valve body for performing opening and closing operation by reciprocally moving in predetermined directions with respect to the valve seat; and
a coil spring incorporated to make the valve body contact the valve seat,
wherein an annular abutting surface is provided in the valve seat by a contact with an end of the valve body, and
the valve seat is configured to have a thickened part in which a thickness in normal direction of the abutting surface is increased inward from the abutting surface.

2. The cone valve according to claim 1, wherein the end of the valve body is formed to be a side surface, which is bent to be separated from the abutting surface at outermost periphery of the abutting surface, and a bending direction of the side surface is in reciprocal movement direction of the valve body, or in inner direction of the abutting surface from the reciprocal movement direction.

3. The cone valve according to claim 1, wherein the end of the valve body is formed in disc shape and its maximum diameter is 226 to 236 mm.

4. The cone valve according to claim 1, wherein entire length of the coil spring is at least shorter than stroke length of the valve body, when the entire length is equal to or less than free length.

5. The cone valve according to any of claims 1 to 4, wherein the slurry is slurry of nickel oxide ore.
